# FASCICULE DE BREVET EUROPEEN

(11) **EP 3 851 794 B1**
(45) Date de publication et mention de la délivrance du brevet: **06.09.2023**
(21) Numéro de dépôt: 21151922.8
(22) Date de dépôt: 15.01.2021
(51) Int. Cl.: G01C 15/08

(54) **PROCÉDÉ DE GÉOLOCALISATION D'UN POINT CIBLE**
VERFAHREN ZUR GEOLOKALISIERUNG EINES ZIELPUNKTS
METHOD FOR GEOPOSITIONING A TARGET POINT

(30) Priorité: 16.01.2020 FR 2000418
(43) Date de publication de la demande: 21.07.2021
(73) Titulaire: Agreenculture, 31520 Ramonville-Saint-Agne (FR)
(72) Inventeur: AUBÉ, Christophe, 31500 TOULOUSE (FR); COROIU, Nicoleta, 31400 TOULOUSE (FR); GOUA de BAIX, Emmanuel, 31300 TOULOUSE (FR)
(74) Mandataire: IP Trust

(56) Documents cités:
- US-A1- 2003 058 164
- US-A1- 2009 024 325
- "Propagation des incertitudes", Wikipedia , 12 mars 2019 (2019-03-12), XP055728920, Extrait de l'Internet: URL:https://fr.wikipedia.org/w/index.php?t itle=Propagation_des_incertitudes&oldid=15 7464989 [extrait le 2020-09-09]

## Description

### Domaine de l'invention

La présente invention concerne le domaine de l'arpentage et de la géolocalisation précise d'un point d'un terrain. Elle concerne plus particulièrement une mire d'arpentage électronique formée par un mât dont la tête intègre une antenne permettant de recevoir les signaux de géolocalisation et navigation par un système de satellites (en sigle « GNSS ») traités par un récepteur et un module électronique fournissant directement les coordonnées (x, y, z) ainsi que des indicateurs d'incertitude estimée sur les coordonnées calculées.

Lorsqu'on veut déterminer la géolocalisation d'un point autre que le centre de l'antenne (par exemple un point au sol) à partir de la géolocalisation d'une antenne placée au sommet d'une perche, il reste néanmoins des sources d'erreurs liées à la structure matérielle de la mire d'arpentage, et à son utilisation, notamment lorsqu'elle ne peut pas être utilisée dans une position strictement verticale. Cela se produit notamment lorsque le géomètre-expert opère dans certaines zones difficiles d'accès : les coins, les pipelines, bords de mur, sur des surfaces inclinées, etc.

Pour prendre en compte ses erreurs structurelles, certaines mires d'arpentage intègre un compensateur d'inclinaison pour corriger automatiquement les coordonnées du point recueilli en fonction de l'angle d'inclinaison et de la direction d'inclinaison de la mire. De cette façon il est inutile de centrer avec précision à la verticale.

D'autres équipements intègrent un niveau à eau électronique, permettant d'améliorer la précision et corriger les dérives en cas de forte interférence du champ magnétique. Le récepteur enregistre automatiquement les données de positionnement lorsque la bulle électronique détecte le niveau correct sans aucune intervention de l'opérateur.

### Etat de la technique

On connaît dans l'état de la technique des mires d'arpentage formées par un mât muni d'une antenne en tête du mât et d'un module GNSS-RTK comportant des moyens de compensation d'inclinaison, par exemple les équipements commercialisés sous les marques STONEX S10, GEOMAX Zenith35 ou Trimble R10 SurePoint^{™} ou LEICA GS07 ou GS18T.

On connaît aussi la demande de brevet américain US2003059164 concernant permettant de mesurer des coordonnées d'une cible à partir d'une antenne d'un système de navigation par satellite et un capteur de dévers installés sur un poteau télémétrique. Le capteur est placé au niveau de la pointe inférieure du poteau. Des signaux émanant de l'antenne et du capteur de dévers sont transmis à un récepteur qui calcule les coordonnées de l'antenne à partir des signaux antenne, et la position des pointes du poteau à partir des coordonnées calculées et des données d'inclinaison. L'opérateur place la pointe du poteau sur la cible et pivote le poteau avec la main sur un secteur d'angle de 15 degrés tout en maintenant la pointe du poteau sur la cible. La hauteur de la cible peut être calculée à l'aide d'une seule série de mesures, et les coordonnées X-Y peuvent être calculées à l'aide de trois séries de mesures seulement. L'utilisation de mesures additionnelles réduit les erreurs dans les coordonnées de la cible puisque les erreurs dues à la propagation par trajets multiples ne sont pas corrélées pendant le mouvement de l'antenne. L'alignement vertical du poteau est inutile.

Cette solution n'est pas totalement satisfaisante car, s'agissant d'un équipement mobile alimenté sur batterie, il est important de maîtriser la consommation électrique. Pour l'équipement décrit ci-dessus, il est nécessaire de mettre en service le processeur, puis de positionner la pointe et déclencher l'enregistrement des signaux acquis, généralement en maintenant l'état d'enregistrement pendant une durée indéterminée et qui n'est pas forcément optimisée. L'opérateur ne sait donc pas bien quand les données acquises sont fiables.

On connaît aussi la demande de brevet US2009024325 concernant une mire comprend un mât de levé ayant une extrémité inférieure de mât de levé, avec un transducteur de position couplé à une extrémité supérieure de mât de levé. Une pointe de contact au sol se trouve à l'extrémité inférieure. Le mât d'arpentage utilise un système de navigation inertielle assistée comme capteur combiné d'inclinaison et de cap. Le système de navigation inertielle assistée fournit des sorties de cap et d'angle d'Euler caractérisant l'inclinaison du poteau de levé. Les sorties de cap et d'angle d'Euler sont utilisées par un ordinateur et un programme pour effectuer des transferts de position d'un transducteur de position à l'extrémité supérieure du pôle vers le commutateur GCZVI ou la pointe au sol à l'aide d'un ensemble d'équations de décalage ou de transfert de position. Le capteur de position est soit un GNSS, soit un RTS servant de capteur de position. Le transfert des données de position à partir de la position du transducteur de position fournit la position référencée à la terre ou référencée sur la grille de la pointe à l'extrémité inférieure du levé du pôle de levé.

### Solution apportée par l'invention

L'invention a pour objet un procédé selon la revendication 1 et un dispositif selon la revendication 14. Des caractéristiques optionnelles de l'invention sont présentées dans les revendications dépendantes.

Afin de remédier aux inconvénients de l'art antérieur, la présente invention concerne selon son acception la plus générale un procédé de géolocalisation d'un point cible conforme à la revendication 1 ainsi qu'un équipement pour la mise en œuvre ce procédé.

On entend par « données inertielles brutes » les données délivrées par le capteur d'inclinaison, par exemple la centrale inertielle, sans information sur le cap de l'inclinaison.

On entend par « mouvement giratoire » au sens du présent brevet un déplacement de la tête passant par au moins trois points non alignés. Généralement, ce mouvement se rapproche d'un mouvement circulaire, mais la nature précise de la trajectoire n'est pas déterminante pour la précision du résultat.

On entend par « instant t » l'information temporelle délivrée par une horloge temps réel du capteur d'inclinaison ou du module de géolocalisation au moment où la donnée respectivement d'inclinaison ou de géolocalisation est délivrée. Dans le cas où chacun des composants a sa propre horloge, il est possible qu'une différence de dérive d'horloge conduise à ce que le signal temporel associé aux données d'inclinaison ne soit pas strictement identique au signal temporel associé aux données du module de géolocalisation, et dans ce cas, on pourra négliger le décalage, et on considérera que « l'instant t » désigne un instant compris entre les deux signaux d'horloge les plus proches, avec une incertitude correspondant au décalage.

On pourra aussi corriger la dérive entre les deux horloges en calculant une information temporelle corrigée par un traitement de synchronisation.

Les informations temporelles réelles ou synchronisées sont utilisées pour regrouper les signaux d'inclinaison et de géolocalisation correspondant à une même inclinaison de la tige, pendant la giration de la tige.

### Description détaillée d'un exemple de réalisation de l'invention

La présente invention sera mieux décrite à la lecture de la description qui suit, se référant aux dessins annexés où :
[Fig. 1] La figure 1 représente une vue schématique d'une mire d'arpentage selon l'invention
[Fig. 2] La figure 2 représente une vue schématique de la géométrie du système.

### Principe général

L'arpentage dans les terrains avec inclinaisons demande une projection du point enregistré sur le plan horizontal contenant le pied de la tige de la mire d'arpentage.

En plaçant le pied de la perche sur le point, il faut projeter le point d'antenne en bas de la perche. La manipulation terrain (correction mécanique par des niveaux à bulle) devient compliquée pour un utilisateur non-expérimenté et prend beaucoup de temps (centrage du niveau avec une précision < 1° demande beaucoup de finesse). La manipulation logicielle est possible avec une centrale inertielle, un compas et un magnétomètre, pour connaître la position 3D de l'objet par rapport au plan horizontal (projection à la verticale) et pour connaître la direction du boîtier dans l'espace (la direction pour la projection).

La solution proposée par l'invention est basée sur une approche mathématique qui permet de connaître avec précision la position du point en bas de la tige (tige placée sur le point) telle que décrite dans la demande de brevet US2003059164. Une manipulation terrain est nécessaire, mais plus rapide et moins compliqué que celle avec les niveaux à bulle :
1. L'utilisateur doit positionner la perche sur le point physique. Selon l'invention, un capteur détecte le contact de la pointe (2) avec le sol. Optionnellement la mire comporte un lecteur de l'identifiant d'un clou géodésique (par exemple une caméra pour lire un identifiant formé par un QRCode) pour automatiser le processus d'enregistrement des données successives de géolocalisation.
2. Il bougera la perche pour modifier son inclinaison en maintenant la pointe sur son point de contact avec le sol, il pourra faire un cercle approximatif avec le boîtier (antenne + centrale inertielle) monté sur la tige, tout en restant avec la pointe de la tige appuyée sur le point de référence du sol. Ce mouvement commande l'activation de la mesure. Un signal sonore ou lumineux est commandé lorsque le nombre de données acquises atteint une valeur seuil.
   En cas de perte de contact, le capteur délivre un signal commandant une alerte sonore et/ou visuelle et annulation de l'acquisition en cours.
3. Il peut répéter l'opération tant que l'indicateur d'incertitude du calcul de la position est trop élevé. Préalablement, la hauteur exacte de la tige (distance entre la pointe et l'antenne) doit être calibrée dans le système. Il peut s'agir d'une simple mesure de distance avec un mètre.

### Description matérielle de la mire d'arpentage

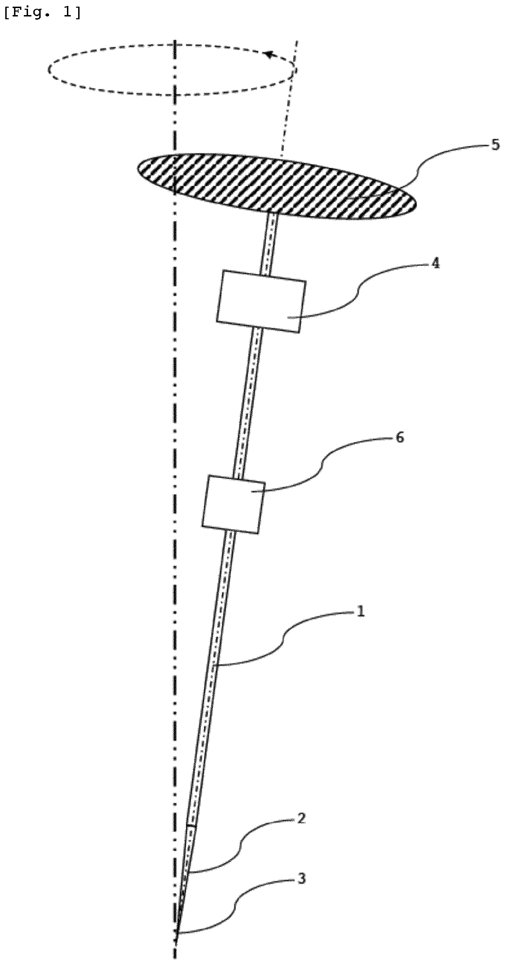

La figure 1 illustre de manière schématique une mire d'arpentage selon l'invention. Elle comprend un corps rigide (1) en forme de tige avec un pied pointu (2) définissant un point-cible (3) qui correspond au point de mesure sur le sol. La hauteur totale est d'environ 2 mètres. Elle est mesurée et configurée au préalable dans le système.

Le système comprend également un module électronique (4) pour déterminer de manière répétée la position d'une antenne GNSS (5). Il fournit des données d'acquisition périodique de type (x_{Gi}, y_{Gi}, z_{Gi}, tₚᵢ, eₚᵢ) qui sont enregistrées dans une mémoire informatique locale.

La mire d'arpentage comprend en outre un module de mesure inertielle (4), par exemple une centrale inertielle dans le boîtier du récepteur GNSS, placée sur le corps (1) sous la forme d'un système micro-électro-mécanique et comprenant capteurs, y compris accéléromètres et gyroscopes, et éventuellement unité de traitement des mesures.

Le module de mesure inertielle (6) comprend par exemple trois accéléromètres dans une configuration orthogonale, c'est-à-dire dans une configuration telle que leurs axes de mesure sont orthogonaux, et trois gyroscopes dans une configuration orthogonale, c'est-à-dire dans lesquels leurs axes de mesure sont orthogonaux.

Les mesures inertielles sont traitées, soit dans le module de mesure inertielle (6), soit dans le module électronique (4), pour fournir périodiquement des données d'inclinaison (alphaᵢ, tₐᵢ, eₐᵢ) également enregistrées dans ladite mémoire informatique locale.

La centrale inertielle et le capteur d'inclinaison peuvent partager la même horloge en temps réel, ce qui garantit la parfaite synchronicité des données d'inclinaison et de géolocalisation à chacune des acquisitions.

Si le capteur d'inclinaison et le module de géolocalisation disposent chacun d'une horloge distincte, on procède à une synchronisation de l'une par rapport à l'autre, de manière connue, par exemple en injectant le signal de synchronisation de l'une des horloges dans l'entrée de synchronisation de l'autre horloge.

La pointe de la mire comporte un capteur, par exemple un contacteur électrique, délivrant un signal électrique lorsqu'elle vient en contact avec le sol. La sensibilité de la détection peut être ajustée pour n'intervenir que lorsque la pression exercée sur le capteur est supérieur à 90% du poids de la mire par exemple, pour éviter les déclenchements intempestifs ou les positionnements imparfaits de la pointe.

La détection d'un mouvement de la mire, après l'activation du module électronique par le capteur de contact au sol, déclenche l'acquisition des données géodésiques. Cette acquisition se poursuit jusqu'à ce que le nombre de données atteint une valeur seuil. Le module électronique commande alors l'émission d'un signal sonore ou visuel et le cas échéant l'affichage des informations de géolocalisation.

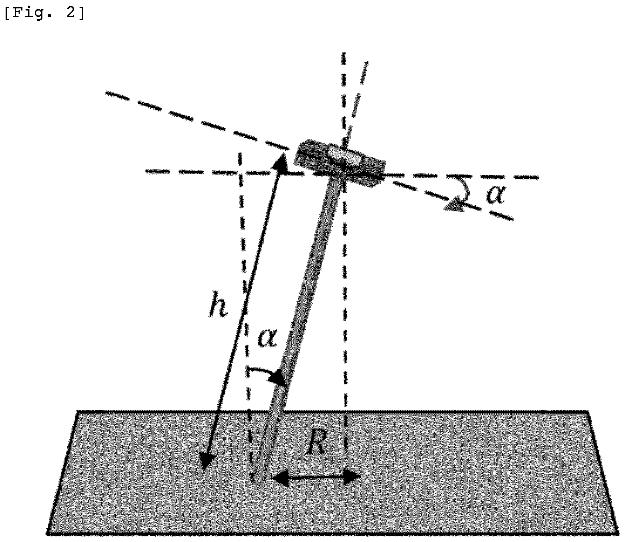

La figure 2 représente schématiquement la géométrie du système.

Le traitement des séquences de données d'inclinaison

### Utilisation de la mire d'arpentage selon l'invention.

Pour déterminer les coordonnées d'un point A, on pose la pointe (3) de la mire sur ce point, avec une inclinaison quelconque, mais pas trop éloignée de la verticale, par exemple de moins de 15° par rapport à la verticale. Une trop forte inclinaison par rapport à la verticale nuirait à la bonne réception des signaux GNSS par l'antenne GNSS (5).

On déclenche ensuite l'enregistrement des données tout en faisant effectuer à la mire un mouvement de rotation autour de l'axe vertical, en conservant la pointe (3) immobile. Le mouvement peut être approximatif : on n'a pas besoin de connaître exactement l'axe vertical et le mouvement n'a pas besoin d'être exactement circulaire.

L'acquisition et l'enregistrement des signaux démarre lorsque le contacteur de la pointe détecte un contact au sol et lorsque le capteur d'inclinaison détecte une variation de l'inclinaison de la mire, et prend fin lorsqu'il y a eu assez de positions différentes autour de l'axe vertical, typiquement au bout d'un tour complet autour de l'axe vertical ou après l'acquisition d'au moins trois points de mesure. Le déclenchement de l'acquisition et de l'enregistrement des données et/ou la fin de cette séquence d'acquisition et d'enregistrement est commandée automatiquement par le module électronique (4).

Pendant la séquence, le module électronique (4) peut utiliser la détermination des indicateurs d'incertitude e_{A} pour commander l'arrêt de l'enregistrement, par exemple par comparaison à un seuil. L'arrêt automatique de l'enregistrement peut être signalé par tous moyens à l'opérateur.

A la fin de cette séquence, le calculateur détermine les coordonnées (x_{A},y_{A},z_{A})de la pointe ainsi que les indicateurs d'incertitude finaux e_{A} par le traitement des données enregistrées pendant la séquence de rotation de la mire.

### Traitement de la séquence de données

Chacune des acquisitions donne lieu à l'enregistrement d'une séquence de type (alphaᵢ, x_{Gi}, y_{Gi}. et éventuellement eᵢ). Chacune de ces séquences peut être représentée sous la forme d'un cercle de centre (x_{Gi}, y_{Gi}) et de rayon Rᵢ=h.sin(alphaᵢ).

Le point recherché appartient par principe à chacun de ces cercles, et en recherchant l'intersection de ces cercles, on détermine la position effective de la pointe (3) de la tige (1).

La détermination numérique de cette intersection (x_{A}, y_{A}) se fait de manière connue, par exemple, par la résolution du système d'équations (x_{A}-x_{Gi})² +(y_{A}-y_{Gi})² - Rᵢ²=0

Lorsque l'on prend en compte l'erreur eᵢ, on peut multiplier le rayon Rᵢ par une valeur 1+ eᵢ et procéder au même traitement de résolution du système d'équations ainsi corrigé.

## Revendications

1. Procédé de géolocalisation d'un point cible (A) matérialisé par la pointe (3) d'une tige (1) d'une mire, la tête de la tige (1) supportant au moins une antenne (5) reliée à un module de géolocalisation fournissant des données (x_{G},y_{G},z_{G},t) où x_{G},y_{G},z_{G} désignent les coordonnées de la position de ladite antenne à l'instant t, un capteur d'inclinaison (4) fournissant une donnée (alpha, t) fonction de l'inclinaison de ladite antenne (5) par rapport à la verticale à l'instant t, ledit procédé comportant une étape d'enregistrement d'une succession de données (x_{Gi},y_{Gi},alphaᵢ) pendant une période où la position de ladite pointe (3) est immobile et où la position de ladite tête est animée d'un mouvement giratoire, et en ce qu'on applique un traitement numérique sur ladite succession de données (x_{Gi},y_{Gi},alphaᵢ) pour calculer les coordonnées (x_{A},y_{A}) dudit point cible (A), ladite pointe étant munie d'un détecteur de contact avec le sol, ledit détecteur de contact avec le sol commandant le démarrage d'une séquence d'acquisition, **caractérisé en ce que** la séquence d'acquisition est démarrée pendant une durée comprise entre la détection par ledit capteur d'inclinaison d'un mouvement de giration et l'acquisition d'un nombre de données (x_{Gi},y_{Gi},alphaᵢ) dépassant un seuil prédéterminé.

2. Procédé de géolocalisation d'un point cible (A) selon la revendication 1 **caractérisé en ce que** ladite mire comporte en outre un avertisseur sonore et/ou visuel commandé par un signal de fin de mesure lorsque le nombre de données de géolocalisation et d'inclinaison correspond audit seuil prédéterminé.

3. Procédé de géolocalisation d'un point cible (A) selon la revendication 1 **caractérisé en ce que** ledit traitement numérique consiste :
- à calculer pour chacun desdits enregistrements une variable Rᵢ=h.sin(alphaᵢ) où h désigne la distance entre ladite pointe (3) et l'antenne (5), et
- à déterminer les coordonnées (x_{A}, y_{A}) dudit point cible (A) telles que pour au moins deux données enregistrées, l'équation (x_{A}-x_{Gi})² +(y_{A}-y_{Gi})² - Rᵢ²=0 est vérifiée.

4. Procédé de géolocalisation d'un point cible (A) selon la revendication 1 **caractérisé en ce que** l'on applique en outre un calcul par la méthode des moindres carrés sur les coordonnées (x_{A}, y_{A}) dudit point cible (A) calculées pour une partie au moins des données (x_{Gi},y_{Gi},alphaᵢ) enregistrés.

5. Procédé de géolocalisation d'un point cible (A) selon la revendication 1 **caractérisé en ce que** ledit module de géolocalisation et ledit capteur d'inclinaison sont synchronisés par une horloge commune.

6. Procédé de géolocalisation d'un point cible (A) selon la revendication 1 **caractérisé en ce que** une horloge du module de géolocalisation et une horloge du capteur d'inclinaison sont distinctes et **en ce qu'**on applique une étape de synchronisation entre lesdites données (x_{G},y_{G},z_{G},t) délivrées par ledit module de géolocalisation, et lesdites données (alpha, t) fournies par ledit capteur d'inclinaison.

7. Procédé de géolocalisation d'un module de géolocalisation selon la revendication 6 **caractérisé en ce que** ladite donnée (x_{G},y_{G},z_{G}) désigne la position de ladite antenne à un instant tₚ, ledit module de géolocalisation fournissant en outre une donnée eₚ correspondant à des indicateurs d'incertitude estimée sur ladite position, ladite donnée alpha étant fonction de l'inclinaison de ladite antenne par rapport à la verticale à l'instant tₐₗₚₕₐ, proche de tₚ, et fournissant une donnée eₐₗₚₕₐ correspondant auxdits indicateurs d'incertitude estimée de ladite inclinaison, le procédé comportant des étapes de synchronisation dudit temps tₚ et dudit temps tₐₗₚₕₐ dont le signal est noté s, et d'enregistrement d'une succession de données (x_{Gi},y_{Gi}, z_{Gi}, alphaᵢ, tₚᵢ, tₐₗₚₕₐᵢ, sᵢ) et desdits indicateurs d'incertitude (eₚᵢ, eₐₗₚₕₐᵢ) pendant une période où la position de ladite pointe est immobile et où la position de ladite tête est animée d'un mouvement giratoire autour de la verticale du point cible (A), et **en ce qu'**on applique un traitement numérique sur ladite succession de données (x_{Gi},y_{Gi},z_{Gi},alphaᵢ,tₚᵢ,tₐᵢ,sᵢ) et desdits indicateurs d'incertitude (eₚᵢ, eₐₗₚₕₐᵢ) pour calculer les coordonnées (x_{A},y_{A},z_{A}) du point A et pour estimer les indicateurs d'incertitude e_{A} desdites coordonnées.

8. Procédé de géolocalisation d'un point cible (A) selon la revendication 6 **caractérisé en ce que** ledit traitement numérique consiste :
- à synchroniser, c'est-à-dire ramener au même instant tᵢ, pour chacun desdits enregistrements, la donnée d'inclinaison alphaᵢ à un instant tₐₗₚₕₐᵢ avec les données de position (x_{Gi}, y_{Gi}, z_{Gi}) de l'instant tₚᵢ à l'aide d'un signal de synchronisation sᵢ
- à calculer pour chacune desdites données synchronisées une variable Rᵢ=h.sin(alphaᵢ) où h désigne la distance entre ladite pointe (3) et l'antenne (5), et
- à déterminer les coordonnées (x_{A}, y_{A}) telles que pour au moins deux données synchronisées l'équation (x_{A}-x_{Gi})² + (y_{A}-y_{Gi})² - Rᵢ²=0 est vérifiée.

9. Procédé de géolocalisation selon la revendication 5 **caractérisé en ce que** ledit traitement numérique consiste en outre :
- à déterminer pour chacun desdites données synchronisées une variable hᵢ = h.cos(alphaᵢ)
- à déterminer la coordonnée z_{A} telle que pour au moins une donnée synchronisée z_{A} = z_{Gi} - hᵢ
- où :
o z_{A} désigne l'altitude de la pointe (3)
o z_{Gi} désigne l'altitude de l'antenne, à chaque instant d'acquisition
o h désigne la hauteur de ladite tige (1).

10. Procédé de géolocalisation selon la revendication 5 **caractérisé en ce que** ledit traitement numérique consiste en outre à appliquer un calcul par moyenne sur les valeurs z_{A} calculées pour une partie au moins des données (z_{Gi}, alphaᵢ,tₚᵢ,tₐₗₚₕₐᵢ,sᵢ)

11. Procédé de géolocalisation selon la revendication 5 **caractérisé en ce que** ledit traitement numérique consiste en outre à déterminer des indicateurs d'incertitude e_{A} des coordonnées (x_{A},y_{A},z_{A}) par propagation d'indicateurs d'incertitude enregistrés (eₚᵢ, eₐₗₚₕₐᵢ) desdites données enregistrées (x_{Gi},y_{Gi},z_{Gi}, alphaᵢ, tₚᵢ, tₐᵢ, sᵢ).

12. Procédé de géolocalisation selon la revendication 11 **caractérisé en ce que** lesdits indicateurs d'incertitude e_{A} des coordonnées (x_{A},y_{A},z_{A}) sont utilisés pour commander l'arrêt de l'enregistrement des données par comparaison à un seuil donné.

13. Procédé de géolocalisation selon la revendication 11 **caractérisé en ce que** lesdits indicateurs d'incertitude e_{A} des coordonnées (x_{A},y_{A},z_{A}) sont communiqués à un équipement de l'opérateur de ladite mire d'arpentage

14. Mire d'arpentage pour la géolocalisation d'un point cible (A) comportant une tige (1) munie d'une pointe (3) munie d'un capteur de contact au sol et au moins une antenne (5) reliée à un module de géolocalisation fournissant une donnée (x_{G},y_{G},z_{G}) e où x_{G},y_{G},z_{G} désignent les coordonnées de la position de ladite antenne à l'instant t, ladite mire comportant un capteur d'inclinaison fournissant une donnée (alpha, t) fonction de l'inclinaison de ladite antenne (5) par rapport à la verticale, ladite mire comportant un calculateur programmé pour réaliser un traitement numérique correspondant à l'un au moins des procédés 1 à 13.

15. Mire d'arpentage pour la géolocalisation d'une pointe (3) selon la revendication 14 **caractérisée en ce qu'**elle comporte un module de géolocalisation et un capteur d'inclinaison dont les horloges sont synchronisées entre elles par le moyen d'une horloge de référence.

16. Mire d'arpentage pour la géolocalisation d'une pointe (3) selon la revendication 14 **caractérisée en ce que** l'horloge dudit module de géolocalisation sert d'horloge de référence **en ce qu'**elle s'accompagne d'un signal de synchronisation noté s permettant aux autres horloges de se synchroniser sur elle.

17. Mire d'arpentage pour la géolocalisation d'une pointe (3) selon la revendication 14 ou 15 ou 16 **caractérisée en ce qu'**elle présente ledit détecteur de contact avec le sol délivre un premier signal d'activation d'une séquence d'acquisition, un second signal étant délivré par ledit capteur d'inclinaison lors de la détection d'un mouvement de giration pour commander l'activation de la mesure, ladite mire comportant en outre un avertisseur sonore et/ou visuel commandé par un signal de fin de mesure lorsque le nombre de données de géolocalisation et d'inclinaison correspond à un seuil prédéterminé.

18. Mire d'arpentage pour la géolocalisation d'une pointe (3) selon la revendication 14, 15 ou 16 **caractérisé en ce qu'**elle comporte en outre un lecteur d'identifiant d'un clou géodésique.

## Patentansprüche

1. Verfahren zur Geolokalisierung eines Zielpunkts (A), der durch die Spitze (3) eines Stabs (1) einer Messlatte materialisiert ist, wobei der Kopf des Stabs (1) mindestens eine Antenne (5) trägt, die mit einem Geolokalisierungsmodul verbunden ist, das Daten (x_{G},y_{G},zₛ,t) liefert, wobei x_{G},y_{G}, z_{G} die Koordinaten der Position der Antenne zum Zeitpunkt t bezeichnen, einen Neigungssensor (4), der einen Datensatz (alpha, t) als Funktion der Neigung der Antenne (5) in Bezug auf die Vertikale zum Zeitpunkt t liefert, wobei das Verfahren einen Schritt des Aufzeichnens einer Datenfolge (x_{Gi},y_{Gi},alphaᵢ) während einer Periode aufweist, in der die Position der Spitze (3) unbeweglich ist und in der die Position des Kopfes durch eine Kreiselbewegung angeregt wird, und dass eine Digitalverarbeitung auf die Datenfolge (x_{Gi},y_{Gi},alphaᵢ) angewendet wird, um die Koordinaten (x_{A},y_{A}) des Zielpunktes (A) zu berechnen, wobei die Spitze mit einem Bodenkontaktdetektor versehen ist, wobei der Bodenkontaktdetektor den Start einer Erfassungsfolge steuert, **dadurch gekennzeichnet, dass** die Erfassungsfolge gestartet wird während einer Dauer zwischen dem Erkennen einer Kreiselbewegung durch den Neigungssensor und dem Erfassen einer Anzahl von Daten (x_{Gi},y_{Gi}, alphaᵢ), die einen vorbestimmten Schwellenwert überschreitet.

2. Verfahren zur Geolokalisierung eines Zielpunkts (A) nach Anspruch 1 **dadurch gekennzeichnet, dass** die Messlatte ferner eine akustische und/oder visuelle Warnung aufweist, die durch ein Signal für das Ende der Messung gesteuert wird, wenn die Anzahl der Geolokalisierungs- und Neigungsdaten dem vorbestimmten Schwellenwert entspricht.

3. Verfahren zur Geolokalisierung eines Zielpunkts (A), nach Anspruch 1, **dadurch gekennzeichnet, dass** die Digitalverarbeitung besteht im:
- Berechnen einer Variablen Rᵢ=h. sin(alphaᵢ) für jede der Aufzeichnungen, wobei h den Abstand zwischen der Spitze (3) und der Antenne (5) bezeichnet, und
- Bestimmen von Koordinaten (x_{A}, y_{A}) des Zielpunkts (A), so dass für mindestens zwei aufgezeichnete Daten, die Gleichung(x_{A}-x_{Gi})² + (y_{A}-y_{Gi})² - Rᵢ²=0 erfüllt ist.

4. Verfahren zur Geolokalisierung eines Zielpunkts (A) nach Anspruch 1, **dadurch gekennzeichnet, dass** ferner eine Berechnung durch die Methode der kleinsten Quadrate auf die Koordinaten (x_{A}, y_{A}) des Zielpunkts (A), die für mindestens einen Teil der aufgezeichneten Daten (x_{Gi},y_{Gi}, alphaᵢ) berechnet wurden, angewendet wird.

5. Verfahren zur Geolokalisierung eines Zielpunkts (A) nach Anspruch 1, **dadurch gekennzeichnet, dass** das Geolokalisierungsmodul und der Neigungssensor durch einen gemeinsamen Taktgeber synchronisiert werden.

6. Verfahren zur Geolokalisierung eines Zielpunkts (A) nach Anspruch 1, **dadurch gekennzeichnet, dass** ein Taktgeber des Geolokalisierungsmoduls und ein Taktgeber des Neigungssensors verschieden sind und dass ein Schritt zur Synchronisation zwischen den Daten (x_{G},y_{G},z_{G},t), die von dem Geolokalisierungsmodul geliefert werden, und den Daten (alpha, t), die von dem Neigungssensor geliefert werden, angewendet wird.

7. Verfahren zur Geolokalisierung eines Geolokalisierungsmoduls nach Anspruch 6, **dadurch gekennzeichnet, dass** die Daten (x_{G},y_{G},z) die Position der Antenne zu einem Zeitpunkt tₚ bezeichnen, wobei das Geolokalisierungsmodul ferner einen Datensatz eₚ liefert, der Indikatoren der geschätzten Ungewissheit über die Position entspricht, wobei der Datensatz alpha eine Funktion der Neigung der Antenne in Bezug auf die Vertikale zum Zeitpunkt tₐₗₚₕₐ nahe tₚ ist und einen Datensatz eₐₗₚₕₐ liefert, der den Indikatoren der geschätzten Unsicherheit der Neigung entspricht, wobei das Verfahren Schritte zur Synchronisation der Zeit tₚ und der Zeit tₐₗₚₕₐ aufweist, deren Signal mit s bezeichnet wird, und zur Aufzeichnung einer Datenfolge (x_{Gi},y_{Gi},z_{Gi},alphaᵢ,tₚᵢ,tₐₗₚₕₐᵢ,Sᵢ) und der Unsicherheitsindikatoren (eₚᵢ, eₐₗₚₕₐᵢ) während einer Periode, in der die Position der Spitze unbeweglich ist und die Position des Kopfes eine Kreiselbewegung um die Vertikale des Zielpunktes (A) durchführt, und dass eine Digitalverarbeitung auf die Datenfolge (x_{G}i,y_{Gi},z_{Gi}, alphaᵢ, t_{Pi},tₐᵢ,Sᵢ) und den Unsicherheitsindikatoren (eₚᵢ, eₐₗₚₕₐᵢ), um die Koordinaten (x_{A},y_{A},z_{A}) des Punktes A zu berechnen und um die Unsicherheitsindikatoren e_{A} der Koordinaten zu schätzen.

8. Verfahren zur Geolokalisierung eines Zielpunktes (A), nach Anspruch 6, **dadurch gekennzeichnet, dass** die Digitalverarbeitung besteht im:
- Synchronisieren, das heißt, Rückführen des Neigungsdatenwerts aₗₚₕₐᵢ zum Zeitpunkt tₐₗₚₕₐᵢ mit den Positionsdaten (x_{Gi}, y_{Gi}, z_{Gi}) zum Zeitpunkt tₚᵢ für jede der Aufzeichnungen auf denselben Zeitpunkt t± mit Hilfe eines Synchronisationssignals Si
- Berechnen einer Variablen Rᵢ=h. sin(alphaᵢ) für jeden der synchronisierten Daten, wobei h den Abstand zwischen der Spitze (3) und der Antenne (5) bezeichnet, und
- Bestimmen der Koordinaten (x_{A}, y_{A}) so, dass für mindestens zwei synchronisierte Daten die Gleichung (x_{A}-x_{Gi})² +(Y_{A}-y_{Gi})² - Rᵢ²=0 erfüllt ist.

9. Verfahren zur Geolokalisierung nach Anspruch 5,
**dadurch gekennzeichnet, dass** die Digitalverarbeitung ferner besteht im:
- Bestimmen für jeden der synchronisierten Daten einer Variablen hᵢ = h.cos(alphaᵢ)
- Bestimmen der Koordinate z_{A} so, dass für mindestens einen synchronisierten Datenwert z_{A} = z_{Gi} - hᵢ
- wobei:
∘ z_{A} die Höhe der Spitze (3) bezeichnet
∘ z_{Gi} die Höhe der Antenne, zu jedem Erfassungszeitpunkt bezeichnet
∘ h die Höhe des Stabs (1) bezeichnet.

10. Verfahren zur Geolokalisierung nach Anspruch 5,
**dadurch gekennzeichnet, dass** die Digitalverarbeitung ferner darin besteht, eine Mittelwertbildung auf die Werte z_{A} anzuwenden, die für mindestens einen Teil der Daten berechnet wurden (z_{Gi}, alphaᵢ, tₚᵢ, tₐₗₚₕₐᵢ,Sᵢ)

11. Verfahren zur Geolokalisierung nach Anspruch 5,
**dadurch gekennzeichnet, dass** die Digitalverarbeitung ferner darin besteht, Unsicherheitsindikatoren e_{A} der Koordinaten (x_{A},y_{A},z_{A}) durch Ausbreitung von aufgezeichneten Unsicherheitsindikatoren (eₚᵢ, eₐₗₚₕₐᵢ) der aufgezeichneten Daten (x_{Gi},y_{Gi},z_{Gi},alphaᵢ,tₚᵢ,tₐᵢ,Sᵢ) zu bestimmen.

12. Verfahren zur Geolokalisierung nach Anspruch 11,
**dadurch gekennzeichnet, dass** die Unsicherheitsindikatoren e_{A} der Koordinaten (x_{A},y_{A},z_{A}) verwendet werden, um das Anhalten der Aufzeichnung von Daten durch Vergleich mit einem gegebenen Schwellenwert zu steuern.

13. Verfahren zur Geolokalisierung nach Anspruch 11,
**dadurch gekennzeichnet, dass** die Unsicherheitsindikatoren e_{A} der Koordinaten (x_{A},y_{A},z_{A}) an eine Ausrüstung des Bedieners der Vermessungslatte übermittelt werden

14. Vermessungslatte zur Geolokalisierung eines Zielpunkts (A), aufweisend einen Stab (1), der mit einer Spitze (3) versehen ist, die mit einem Bodenkontaktsensor versehen ist, und mindestens eine Antenne (5), die mit einem Geolokalisierungsmodul verbunden ist, das einen Datenwert (x_{G},y_{G}, z_{G}) liefert, wobei x_{G},y_{G},z_{G} die Koordinaten der Position der Antenne zum Zeitpunkt t bezeichnen, wobei die Messlatte einen Neigungssensor aufweist, der einen Datenwert (alpha, t) als Funktion der Neigung der Antenne (5) in Bezug auf die Vertikale liefert, wobei die Messlatte einen Rechner aufweist, der so programmiert ist, dass er eine Digitalverarbeitung durchführt, die mindestens einem der Verfahren 1 bis 13 entspricht.

15. Vermessungslatte zur Geolokalisierung einer Spitze (3) nach Anspruch 14, **dadurch gekennzeichnet, dass** sie ein Geolokalisierungsmodul und einen Neigungssensor aufweist, deren Taktgeber mittels eines Referenztaktgebers miteinander synchronisiert werden.

16. Vermessungslatte für die Geolokalisierung einer Spitze (3) nach Anspruch 14, **dadurch gekennzeichnet, dass** der Taktgeber des Geolokalisierungsmoduls als Referenztaktgeber dient, dadurch dass sie von einem mit s bewerteten Synchronisationssignal begleitet wird, das es den anderen Taktgebern ermöglicht, sich auf sie zu synchronisieren.

17. Vermessungslatte zur Geolokalisierung einer Spitze (3) nach Anspruch 14 oder 15 oder 16, **dadurch gekennzeichnet, dass** sie aufweist, dass der Bodenkontaktdetektor ein erstes Signal zur Aktivierung einer Erfassungsfolge liefert, wobei ein zweites Signal von dem Neigungssensor beim Erkennen einer Kreiselbewegung geliefert wird, um die Aktivierung der Messung zu steuern, wobei die Messlatte ferner eine akustische und/oder visuelle Warnung aufweist, die durch ein Signal für das Ende der Messung gesteuert wird, wenn die Anzahl der Geolokalisierungs- und Neigungsdaten einem vorbestimmten Schwellenwert entspricht.

18. Vermessungslatte zur Geolokalisierung einer Spitze (3) nach Anspruch 14, 15 oder 16, **dadurch gekennzeichnet, dass** sie ferner einen Identifikationsleser für einen geodätischen Nagel aufweist.

## Claims

1. Method for geolocation of a target point (A) materialized by the tip (3) of a rod (1) of a leveling tool, the head of the rod (1) supporting at least one antenna (5) connected to a geolocation module providing data (XG, y_{G}, zc, t) where XG, y_{G}, z_{G} refer to the coordinates of the position of said antenna at time t, a tilt sensor (4) providing an item of data (alpha, t) as a function of the tilt of said antenna (5) relative to the vertical at time t, said method comprising a step of recording a succession of data (x_{Gi}, y_{Gi}, alphaᵢ) during a period where the position of said tip (3) is immobile and where the position of said head is driven by a gyratory movement, and in that a digital processing is applied to said succession of data (x_{Gi}, y_{Gi}, alphaᵢ) to calculate the coordinates (x_{A}, y_{A}) of said target point (A), said tip being provided with a ground contact detector, said ground contact detector controlling the starting of an acquisition sequence, **characterized in that** the acquisition sequence is started for a period between the detection by said tilt sensor of a gyratory movement and the acquisition of a number of data (x_{Gi}, y_{Gi}, alphaᵢ) exceeding a predetermined threshold.

2. The method for geolocation of a target point (A) according to claim 1, **characterized in that** said leveling tool further comprises an audible and/or visual warning controlled by an end-of-measurement signal when the number of geolocation and tilt data corresponds to said predetermined threshold.

3. The method for geolocation of a target point (A) according to claim 1, **characterized in that** said digital processing consists of:
- calculating, for each of said recordings, a variable Rᵢ=h.sin(alphaᵢ) where h denotes the distance between said tip (3) and the antenna (5), and
- determining the coordinates (x_{A}, y_{A}) of said target point (A) such that for at least two recorded items of data, the equation (x_{A}-x_{Gi})² + (y_{A}-y_{Gi})² - Rᵢ²=0 is satisfied.

4. The method for geolocation of a target point (A) according to claim 1, **characterized in that** a calculation is also applied by the least-squares method on the coordinates (x_{A}, y_{A}) of said target point (A) calculated for at least part of the recorded data (x_{Gi}, y_{Gi}, alphaᵢ).

5. The method for geolocation of a target point (A) according to claim 1, **characterized in that** said geolocation module and said tilt sensor are synchronized by a common clock.

6. The method for geolocation of a target point (A) according to claim 1, **characterized in that** a clock of the geolocation module and a clock of the tilt sensor are distinct and **in that** a step of synchronization is applied between said data (x_{G}, y_{G}, z_{G}, t) delivered by said geolocation module, and said data (alpha, t) provided by said tilt sensor.

7. The method for geolocation of a geolocation module according to claim 6, **characterized in that** said data (x_{G}, y_{G}, z_{G}) denotes the position of said antenna at an instant tₚ, said geolocation module further providing an item of data eₚ corresponding to indicators of estimated uncertainty as to said position, said alpha data being a function of the tilt of said antenna relative to the vertical at the time tₐₗₚₕₐ, close to tₚ, and providing an item of data eₐₗₚₕₐ corresponding to said indicators of estimated uncertainty as to said tilt, the method comprising steps of synchronizing said time tₚ and said time tₐₗₚₕₐ whose signal is denoted s, and recording a succession of data (x_{Gi}, y_{Gi}, z_{Gi}, alphaᵢ, tₚᵢ, tₐₗₚₕₐᵢ, sᵢ) and said indicators of uncertainty (eₚᵢ, eₐₗₚₕₐᵢ) during a period where the position of said tip is immobile and where the position of said head is animated by a gyratory movement around the vertical of the target point (A), and **in that** a digital processing is applied to said succession of data (x_{Gi}, y_{Gi}, z_{Gi}, alphaᵢ, tₚᵢ, tₐᵢ, sᵢ) and said indicators of uncertainty (eₚᵢ, eₐₗₚₕₐᵢ) to calculate the coordinates (x_{A}, y_{A}, z_{A}) of the point A and to estimate the uncertainty indicators e_{A} of said coordinates.

8. The method for geolocation of a target point (A) according to claim 6, **characterized in that** said digital processing consists of:
- synchronizing, that is to say setting to the same time t±, for each of said recordings, the tilt item of data alphaᵢ at a time tₐₗₚₕₐᵢ with the position data (x_{Gi}, y_{Gi}, z_{Gi}) of the time tₚᵢ using a synchronization signal Sᵢ
- calculating, for each of said data synchronized, a variable Rᵢ=h.sin(alphaᵢ), where h denotes the distance between said tip (3) and the antenna (5), and
- determining the coordinates (x_{A}, y_{A}) such that for at least two items of data synchronized with the equation (x_{A}-x_{Gi})² + (y_{A}-y_{Gi})² - Rᵢ² = 0 is satisfied.

9. The geolocation method according to claim 5, **characterized in that** said digital processing further comprises:
- determining for each of said synchronized data a variable hᵢ = h.cos(alphaᵢ)
- determining the coordinate z_{A} such that for at least one synchronized item of data z_{A} = z_{Gi} - hᵢ
- where:
∘ z_{A} denotes the altitude of the tip (3)
∘ z_{Gi} denotes the altitude of the antenna, at each acquisition time
∘ h denotes the height of said rod (1).

10. The geolocation method according to claim 5, **characterized in that** said digital processing further comprises applying an average calculation to the values z_{A} calculated for at least part of the data (z_{Gi}, alphaᵢ, tₚᵢ, tₐₗₚₕₐᵢ, sᵢ)

11. The geolocation method according to claim 5, **characterized in that** said digital processing further consists of determining uncertainty indicators e_{A} of coordinates (x_{A}, y_{A}, z_{A}) by propagation of recorded uncertainty indicators (eₚᵢ, eₐₗₚₕₐᵢ) of said recorded data (x_{Gi}, y_{Gi}, z_{Gi}, alphaᵢ, tₚᵢ, tₐᵢ, sᵢ).

12. The geolocation method according to claim 11, **characterized in that** said uncertainty indicators e_{A} of the coordinates (x_{A}, y_{A}, z_{A}) are used to control the stopping of the recording of the data by comparison to a given threshold.

13. The geolocation method according to claim 11, **characterized in that** said uncertainty indicators e_{A} of the coordinates (x_{A}, y_{A}, z_{A}) are communicated to an equipment item of the operator of said leveling tool

14. A leveling tool for the geolocation of a target point (A) comprising a rod (1) provided with a tip (3) provided with a ground contact sensor and at least one antenna (5) connected to a geolocation module providing an item of data (x_{G}, y_{G}, z_{G}) where x_{G}, y_{G}, z_{G} refer to the coordinates of the position of said antenna at time t, said leveling tool comprising a tilt sensor providing an item of data (alpha, t) as a function of the tilt of said antenna (5) relative to the vertical, said leveling tool comprising a computer programmed to perform digital processing corresponding to at least one of the methods 1 to 13.

15. The leveling tool for the geolocation of a tip (3) according to claim 14, **characterized in that** it comprises a geolocation module and a tilt sensor whose clocks are synchronized with one another by means of a reference clock.

16. The leveling tool for the geolocation of a tip (3) according to claim 14, **characterized in that** the clock of said geolocation module acts as a reference clock **in that** it is accompanied by a synchronization signal denoted s allowing the other clocks to synchronize to it.

17. The leveling tool for the geolocation of a tip (3) according to claim 14 or 15 or 16, **characterized in that** it has said ground contact detector delivers a first signal for activating an acquisition sequence, a second signal being delivered by said tilt sensor during the detection of a gyratory movement to control the activation of the measurement, said leveling tool further comprising an audible and/or visual warning controlled by an end-of-measurement signal when the number of geolocation and tilt data corresponds to a predetermined threshold.

18. The leveling tool for the geolocation of a tip (3) according to claim 14, 15 or 16, **characterized in that** it further comprises a reader of surveying nail identifiers.
